# EUROPEAN PATENT APPLICATION

(11) **EP 1 316 576 A1**
(43) Date of publication of application: **04.06.2003**
(21) Application number: 01963441.9
(22) Date of filing: 05.09.2001
(51) Int. Cl.: C08G 64/30

(54) **PROCESS FOR PREPARATION OF MOLTEN MIXTURES OF AROMATIC HYDROXYL COMPOUNDS AND CARBONIC DIESTERS**

(30) Priority: 08.09.2000 JP 2000272752
(71) Applicant: TEIJIN LIMITED, Osaka-shi Osaka 541-0054 (JP)
(72) Inventor: HIRATA, Masumi, c/o Teijin Limited,, Iwakuni-shi, Yamaguchi 740-0014 (JP); SAWAKI, Toru, c/o Teijin Limited,, Iwakuni-shi, Yamaguchi 740-0014 (JP); SASAKI, Katsushi, c/o Teijin Limited,, Iwakuni-shi, Yamaguchi 740-0014 (JP)
(74) Representative: Hallybone, Huw George
(86) International application number: JP0107700
(87) International publication number: WO02020641

(57) **Abstract**

A process for the production of a polycarbonate, capable of measuring the amounts of an aromatic dihydroxy compound and a carbonic acid diester or the ratio of the carbonic acid diester to the aromatic dihydroxy compound quickly and efficiently and adjusting it to obtain a polycarbonate having high quality with little variations.

The ratio of the carbonic acid dieter to the aromatic dihydroxy compound in the molten mixture (A) containing the aromatic dihydroxy compound and the carbonic acid diester is measured by near infrared spectroscopy at a wavelength of 1,600 to 1,900 nm.

## Description

### Field of the Invention

The present invention relates to a process for the preparation of a molten mixture containing an aromatic hydroxy compound and a carbonic acid diester. More specifically, it relates to a process for the preparation of a molten mixture containing an aromatic hydroxy compound and a carbonic acid diester by suitably controlling the molar ratio thereof, which is used to produce a polycarbonate.

### Description of the Prior Art

A polycarbonate is produced by directly polymerizing an aromatic dihydroxy compound such as bisphenol A with phosgene in the presence of an organic solvent such as methylene chloride (interfacial polymerization) or by carrying out an ester exchange reaction between an aromatic dihydroxy compound and a carbonic acid diester (melt polycondensation).

Out of these, melt polycondensation has such an advantage that a polycarbonate can be produced at a lower cost than interfacial polymerization and is preferred from the viewpoint of environmental hygiene because a toxic substance such as phosgene is not used.

In the general ester exchange method (melt polycondensation), the ratio of the carbonic acid diester to the aromatic dihydroxy compound must be very strictly controlled to retain the quality of the obtained polycarbonate and to stabilize the process.

In other words, if the ratio of the carbonic acid diester to the aromatic dihydroxy compound is not suitably controlled, the reaction rate greatly varies, thereby making it impossible to maintain the stable process, or a polycarbonate having a markedly different terminal group structure is formed, thereby reducing heat resistance stability disadvantageously.

To measure the amounts and ratio of components of a mixture of two or more components, several on-line and off-line chromatographs are generally used. However, the existing chromatography takes 15 minutes to about 1 hour to measure a single component and when instruments and conditions for measuring components differ from one another, a plurality of chromatographs are needed.

Since strict control and optimization take long due to a set of procedures described above, a reduction in the production efficiency of equipment cannot be avoided and it is difficult to cope with a process change effectively, particularly a change in a continuous production process, JP-A 2000-178354 (the term "JP-A" as used herein means an "unexamined published Japanese patent application") discloses a process for continuously producing an aromatic polycarbonate from an aromatic dihydroxy compound and a carbonic acid diester by an ester exchange method comprising the step of setting the molar ratio of the aromatic dihydroxy compound/the carbonic acid diester to a range of 1.001 to 1.300 and maintaining the variation width of the actual molar ratio at a range of ±0.8 % of the above molar ratio. This publication discloses a densitometer, infrared spectrum, near infrared spectrum, ultraviolet spectrum and Raman spectrum as means of measuring the above molar ratio. However, specific methods for measuring the above molar ratio with these measuring means are not disclosed.

### Summary of the Invention

It is an object of the present invention to provide a method of controlling and optimizing the component ratio of a molten mixture containing an aromatic hydroxy compound and a carbonic acid diester quickly, accurately and efficiently.

It is another object of the present invention to provide a process for the production of a high-quality aromatic polycarbonate, including the above method.

Other objects and advantages of the present invention will become apparent from the following description.

According to the present invention, firstly, the above objects and advantages of the present invention are attained by a process (to be referred to as "first preparation process of the present invention" hereinafter) for the preparation of a molten mixture containing an aromatic hydroxy compound and a carbonic acid diester in a predetermined molar ratio, comprising: (1) measuring the absorbance of the molten mixture at near infrared radiation having a wavelength of 1,600 to 1,900 nm; and (2) obtaining the molar ratio of the carbonic acid diester to the aromatic hydroxy compound in the molten mixture from the measured absorbance and adjusting the molar ratio of the carbonic acid diester to the aromatic hydroxy compound to the predetermined molar ratio.

According to the present invention, secondly, the above objects and advantages of the present invention are attained by a process (to be referred to as "second preparation process of the present invention" hereinafter) for the continuous preparation of a molten mixture containing an aromatic hydroxy compound and a carbonic acid diester in a predetermined molar ratio, comprising:
(1) continuously or intermittently measuring the absorbance of the molten mixture at near infrared radiation having a wavelength of 1,600 to 1,900 nm, while maintaining a change in the temperature of the molten mixture at 10° C or less and causing the molten mixture to flow at a linear velocity of 0.01 to 10 m/sec; and
(2) obtaining the molar ratio of the carbonic acid diester to the aromatic hydroxy compound in the molten mixture from the measured absorbance and adjusting the molar ratio of the carbonic acid diester to the aromatic hydroxy compound to the predetermined molar ratio.

Further, according to the present invention, thirdly, the above objects and advantages of the present invention are attained by a process (to be referred to as "first production process of the present invention" hereinafter) for the production of an aromatic polycarbonate, comprising melt polycondensing a molten mixture prepared by the above first preparation process in the presence of a catalyst containing an alkali metal or alkali earth metal compound.

Finally, according to the present invention, the above objects and advantages of the present invention are attained by a process (to be referred to as "second production process of the present invention" hereinafter) for the continuous production of an aromatic polycarbonate, comprising continuously melt polycondensing a molten mixture prepared by the second preparation process of the present invention in the presence of a catalyst containing an alkali metal or alkali earth metal compound.

### The Preferred Embodiments of the invention

The first preparation process of the present invention will be first described hereinbelow.

In the first preparation process, the absorbance of the molten mixture of the aromatic hydroxy compound and the carbonic acid diester is measured by using near infrared radiation having a wavelength of 1,600 to 1,900 nm. As described hereinafter, an aromatic dihydroxy compound and a carbonic acid diester which are used as raw materials for the production of an aromatic polycarbonate are preferred as the aromatic hydroxy compound and the carbonic acid diester, respectively. The absorbance of the near infrared radiation having the above wavelength can be measured by a near infrared spectroscope, Fourier transformation near infrared spectroscope and conventional improved type IR spectroscope.

The measurement method is preferably continuous measuring system that a probe is directly immersed in a molten product and the measurement data is optically transmitted to the spectroscope through an optical fiber cable.

The wavelength used to measure by near infrared spectroscopy is at least 1,600 to 1,900 nm. Outside this range, the reliability of statistical data processing tends to deteriorate.

It is preferred to use a plurality of wavelengths for measurement by near infrared spectroscopy, that is, average, or weight and average measurement values at a plurality of wavelength bands before use. The expression "weight and average" means a value calculated by (2X + Y)/3 when two data are designated as X and Y and averaged by weighting X double the value of Y.

Thereafter, in the step (2), the molar ratio of the carbonic acid diester to the aromatic dihydroxy compound in the molten mixture is obtained from the above measured absorbance using the relationship previously established between the molar ratio of the carbonic acid diester to the aromatic dihydroxy compound and the absorbance of the molten mixture.

The above established relationship is preferably obtained by carrying out the multi-regression analysis or partial least square analysis of the measured absorbance of a molten mixture of a carbonic acid diester and an aromatic dihydroxy compound in a known molar ratio.

Although absorption bands specific to the hydrocarbon and functional groups appear by the near infrared spectroscope, the obtained near infrared spectrum is such that the absorption bands overlap with each other.

The obtained absorption spectrum is processed mathematically to provide an induction signal representing a concentration or property to be measured.

As the specific mathematical processing method, for example, after the absorption spectrum is converted into a one-dimensioanl or multi-dimensional derivative spectrum, statistical data processing by multi-regression analysis or partial least square analysis is preferred and effective as described above.

The one-dimensional or multi-dimensional derivative spectrum is obtained by differentiating a near infrared spectrum one-dimensionally or multi-dimensionally and is a component which is not changed by the near infrared spectroscope itself, and the partial least square method is to draw the relationship established by regression analysis, that is, a calibration system, after factor analysis is used to re-set axes such that a change in the measured component appears the largest, and is effective for the analysis of a mixture.

Any constant obtained from statistical calibration is used to calculate the value of an unknown sample.

In the step (2), the molar ratio obtained from the established relationship as described above is compared with the predetermined molar ratio. When there is a difference between them, at least one of the aromatic hydroxy compound and carbonic acid diester is added to the molten mixture to adjust the molar ratio of the carbonic acid diester to the aromatic dihydroxy compound to the predetermined molar ratio. Another preparation process comprises changing the reaction temperature, pressure and distillation conditions. The relationship between the degrees of changes of these conditions and the effect of optimization of controlling may be determined by the method of trial and error.

The second preparation process of the present invention comprises continuously or intermittently measuring the absorbance in the step (1) of the above first preparation process and continuously adjusting the molar ratio of the molten mixture to the predetermined molar ratio. To measure the above absorbance, the temperature change of the molten mixture is maintained at 10° C or less and the molten mixture is caused to flow at a linear velocity of 0.01 to 10 m/sec. Outside of the above temperature range and the above linear velocity range, the dispersion of the measurement data becomes large or reproducibility becomes low very often. The above temperature range is preferably 5° C or less and the linear velocity range is preferably 0.05 to 5 m/sec.

According to the second preparation process of the present invention, the probe is directly immersed in the fluid of the molten mixture to be measured to optically transmit the measurement data of the molten mixture to the spectroscope through an optical fiber cable, thereby making it possible to directly obtain information on the molar ratio as absorbance. The measurement time required in this process is 5 minutes or less including data processing and this continuous measurement system is very useful compared with the conventional measurement methods such as HPLC (liquid chromatography).

It has been found that use of the preparation process of the present invention makes it easy to maintain the molar ratio of the carbonic acid diester to the aromatic dihydroxy compound to the predetermined range and to control a change in the molar ratio of the carbonic acid diester to the aromatic dihydroxy compound to a narrow range in the step of measuring the components and that an aromatic polycarbonate product having stable quality typified by color and the amount of the OH terminal group can be obtained. It has also been revealed that it is possible to maintain the molar ratio of the carbonic acid diester to the aromatic dihydroxy compound 1.0 to 1.1 and the change of the molar ratio within a particularly desirable range, which is ±0.5 % of the predetermined molar ratio.

A description is subsequently given of the first production process of the present invention.

According to the first production process, a molten mixture prepared by the above first preparation process , that is, a molten mixture containing an aromatic dihydroxy compound and a carbonic acid diester is melt polycondensed in the presence of a catalyst containing an alkali metal compound or an alkali earth metal compound.

Examples of the above aromatic dihydroxy compound include bis(4-hydroxyphenyl)methane, 2,2-bis(4-hydroxyphenyl)propane, 2,2-bis(4-hydroxy-3-methylphenyl)propane, 4,4-bis(4-hydroxyphenyl)heptane, 2,2-bis(4-hydroxy-3,5-dichlorophenyl)propane, 2,2-bis(4-hydroxy-3,5-dibromophenyl)propane, bis(4-hydroxyphenyl)oxide, bis(3,5-dichloro-4-hydroxyphenyl)oxide, p,p'-dihydroxydiphenyl, 3,3'-dichloro-4,4'-dihydroxydiphenyl, bis(hydroxyphenyl)sulfone, resorcinol, hydroquinone, 1,4-dihydroxy-2,5-dichlorobenzene, 1,4-dihydroxy-3-methylbenzene, bis(4-hydroxyphenyl)sulfide and bis(4-hydroxyphenyl)sulfoxide. Out of these, 2,2-bis(4-hydroxyphenyl)propane (generally called "bisphenol A") is particularly preferred.

Examples of the above carbonic acid diester include diphenyl carbonate, ditolyl carbonate, bis(chlorophenyl)carbonate, m-cresyl carbonate, dinaphthyl carbonate, bis(diphenyl)carbonate, dimethyl carbonate, diethyl carbonate, dibutyl carbonate and dicyclohexyl carbonate. Out of these, diphenyl carbonate is particularly preferred.

The above molten mixture of the present invention may optionally contain an aliphatic diol such as ethylene glycol, 1,4-butanediol, 1,4-cyclohexanedimethanol or 1,10-decanediol, dicarboxylic acid such as succinic acid, isophthalic acid, 2,6-naphthalenedicarboxylic acid, adipic acid, cyclohexanecarboxylic acid or terephthalic acid, or oxyacid such as lactic acid, p-hydroxybenzoic acid or 6-hydroxy-2-naphthoic acid as a comonomer.

As a melt polycondensation reaction catalyst, at least one of an alkali metal compound and an alkali earth metal compound and preferably further a nitrogen-containing basic compound are used.

The alkali metal compound used as a catalyst is, for example, a hydroxide, bicarbonate, carbonate, acetate, nitrate, nitrite, sulfite, cyanate, thiocyanate, stearate, borohydride, benzoate, hydrogenphosphate, bisphenol or phenol salt of an alkali metal. Specific examples of the alkali metal compound include sodium hydroxide, potassium hydroxide, lithium hydroxide, sodium bicarbonate, potassium bicarbonate, lithium bicarbonate, sodium carbonate, potassium carbonate, lithium carbonate, sodium acetate, potassium acetate, lithium acetate, sodium nitrate, potassium nitrate, lithium nitrate, sodium nitrite, potassium nitrite, lithium nitrite, sodium sulfite, potassium sulfite, lithium sulfite, sodium cyanate, potassium cyanate, lithium cyanate, sodium thiocyanate, potassium thiocyanate, lithium thiocyanate, sodium stearate, potassium stearate, lithium stearate, sodium borohydride, potassium borohydride, lithium borohydride, sodium phenylborate, sodium benzoate, potassium benzoate, lithium benzoate, disodium hydrogenphosphate, dipotassium hydrogenphosphate, dilithium hydrogenphosphate, disodium salts, dipotassium salts and dilithium salts of bisphenol A, and sodium salts, potassium salts and lithium salts of phenol.

The alkali earth metal compound used as a catalyst is, for example, a hydroxide, bicarbonate, carbonate, acetate, nitrate, nitrite, sulfite, cyanate, thiocyanate, stearate, benzoate, bisphenol or phenol salt of an alkali earth metal. Specific examples of the alkali earth metal compound include calcium hydroxide, barium hydroxide, strontium hydroxide, calcium bicarbonate, barium bicarbonate, strontium bicarbonate, calcium carbonate, barium carbonate, strontium carbonate, calcium acetate, barium acetate, strontium acetate, calcium nitrate, barium nitrate, strontium nitrate, calcium nitrite, barium nitrite, strontium nitrite, calcium sulfite, barium sulfite, strontium sulfite, calcium cyanate, barium cyanate, strontium cyanate, calcium thiocyanate, barium thiocyanate, strontium thiocyanate, calcium stearate, barium stearate, strontium stearate, calcium borohydride, barium borohydride, strontium borohydride, calcium benzoate, barium benzoate, strontium benzoate, calcium salts, barium salts and strontium salts of bisphenol A, and calcium salts, barium salts and strontium salts of phenol.

In the present invention, (i) an alkali metal salt of an ate complex of a group XIV element of the periodic table or (ii) an alkali metal salt of an oxoacid of a group XIV element of the periodic table may be optionally used as the alkali metal compound of the catalyst. The group XIV element of the periodic table is silicon, germanium or tin.

Examples of the alkali metal salt of the ate complex of the group XIV element of the periodic table of above (i) are enumerated in JP-A 7-268091. Specifically, germanium (Ge) compounds include NaGe(OMe)₅, NaGe(OEt)₅, NaGe(OPr)₅, NaGe(OBu)₅, NaGe(OPh)₅, LiGe(OMe)₅, LiGe(OBu)₅ and LiGe(OPh)₅. Tin (Sn) compounds include NaSn(OMe)₃, NaSn(OMe)₂(OEt), NaSn(OPr)₃, NaSn(O-n-C₆H₁₃)₃, NaSn(OMe)₅, NaSn(OEt)₅, NaSn(OBu)₅, NaSn(O-n-C₁₂H₂₅)₅, NaSn(OEt)₃, NaSn(OPh)₅ and NaSnBu₂(OMe)₃.

Preferred examples of the alkali metal salt of the oxoacid of the group XIV element of the periodic table of above (ii) include alkali metal salts of silicic acid, stannic acid, germanium(II) acid (germanous acid) and germanium(IV) acid (germanic acid).

The alkali metal salt of silicic acid is, for example, an acidic or neutral alkali metal salt of monosilicic acid or a condensate thereof, as exemplified by monosodium orthosilicate, disodium orthosilicate, trisodium orthosilicate and tetrasodium orthosilicate.

The alkali metal salt of stannic acid is, for example, an acidic or neutral alkali metal salt of monostannic acid or a condensate thereof, as exemplified by disodium monostannate (Na₂SnO₃ · xCH₂O, x = 0 to 5) and tetrasodium monostannate (Na₄SnO₄).

The alkali metal salt of germanium(II) acid (germanous acid) is, for example, an acidic or neutral alkali metal salt of monogermanous acid or a condensate thereof, as exemplified by monosodium germanite (NaHGeO₂).

The alkali metal salt of germanium(IV) acid (germanic acid) is, for example, an acidic or neutral alkali metal salt of monogermanium(IV) acid or a condensate thereof, as exemplified by monolithium orthogermanate (LiH₃GeO₄), disodium orthogermanate, tetrasodium orthogermanate, disodium digermanate (Na₂Ge₂O₅), disodium tetragermanate (Na₂Ge₄O₉) and disodium pentagermanate (Na₂Ge₅O₁₁).

The alkali metal compound or alkali earth metal compound as a catalyst is preferably used in an amount of 1 x 10⁻⁸ to 5 x 10⁻⁵ equivalent in terms of the alkali metal element or alkali earth metal element contained in the catalyst based on 1 mol of the aromatic dihydroxy compound. The amount is more preferably 5 x 10⁻⁷ to 1 x 10⁻⁵ equivalent based on the same standard. When the amount of the alkali metal element or alkali earth metal element contained in the catalyst is outside the range of 1 x 10⁻⁸ to 5 x 10⁻⁵ equivalent based on 1 mol of the aromatic dihydroxy compound, it exerts a bad influence upon the physical properties of the obtained polycarbonate or an ester exchange reaction does not fully proceed with the result that a high-molecular weight polycarbonate cannot be obtained disadvantageously.

Examples of the nitrogen-containing basic compound as a catalyst include ammonium hydroxides having an alkyl, aryl or alkylaryl group such as tetramethylammonium hydroxide (Me₄NOH), tetraethylammonium hydroxide (Et₄NOH), tetrabutylammonium hydroxide (BU₄NOH), benzyltrimethylammonium hydroxide (φ-CH₂ (Me)₃NOH) and hexadecyltrimethylammonium hydroxide; tertiary amines such as triethylamine, tributylamine, dimethylbenzylamine and hexadecyldimethylamine; and basic salts such as tetramethylammonium borohydride (Me₄NBH₄), tetrabutylammonium borohydride (Bu₄NBH₄), tetramethylammonium tetraphenylborate (Me₄NBPh₄) and tetrabutylammonium tetraphenylborate (Bu₄NBPh₄).

The above nitrogen-containing basic compound is preferably used in an amount of 1 x 10-5 to 5 x 10⁻³ equivalent in terms of the ammonia nitrogen atom contained in the nitrogen-containing basic compound based on 1 mol of the aromatic dihydroxy compound. The amount is more preferably 2 x 10⁻⁵ to 5 x 10⁻⁴ equivalent, particularly preferably 5 x 10⁻⁵ to 5 x 10⁻⁴ equivalent based on the same standard.

In the present invention, the ratio of the alkali metal compound, alkali earth metal compound and nitrogen-containing basic compound to the charged aromatic dihydroxy compound is expressed by "W (numerical value) equivalent of Z (name of the compound) in terms of metal or basic nitrogen based on 1 mol of the aromatic dihydroxy compound". It means that the amount of Z corresponds to W mol when Z has one sodium atom as in the case of sodium phenoxide or 2,2-bis(4-hydroxyphenyl)propane monosodium salt or has one basic nitrogen atom as in the case of triethylamine and to W/2 mol when Z has two sodium atoms as in the case of 2,2-bis(4-hydroxyphenyl)propane disodium salt.

At least one cocatalyst selected from the group consisting of an oxoacid of a group XIV element of the periodic table and an oxide of the same element may be used as required in combination with the above catalyst in the above polycondensation reaction.

Undesirable side reactions such as a branching reaction liable to occur during a polycondensation reaction and the generation of foreign matter or yellowing in a molding apparatus during molding can be more effectively suppressed without ill-affecting the terminal blocking reaction and polycondensation reaction rate by using the cocatalyst in a specific ratio.

Examples of the oxoacid of the group XIV element of the periodic table include silicic acid, stannic acid and germanic acid. Examples of the oxide of the group XIV element of the periodic table include silicon monoxide, silicon dioxide, tin monoxide, tin dioxide, germanium monoxide, germanium dioxide and condensates thereof.

The cocatalyst is preferably used in an amount of 50 mols (atoms) or less in terms of the group XIV metal element of the periodic table contained in the cocatalyst based on 1 mol (atom) of the alkali metal element contained in the polycondensation reaction catalyst. When the cocatalyst is used in an amount of more than 50 mols (atoms) in terms of the metal element, the polycondensation reaction rate may slow down.

The cocatalyst is more preferably used in an amount of 0.1 to 30 mols (atoms) in terms of the group XIV metal element of the periodic table contained in the cocatalyst based on 1 mol (atom) of the alkali metal element contained in the polycondensation reaction catalyst.

These catalytic systems have an advantage that a polycondensation reaction and a terminal blocking reaction can proceed quickly and completely when they are used in the melt polycondensation reaction. Also, they can suppress an undesirable side reaction such as a branching reaction which occurs in a polycondensation reaction system to a low level.

A sulfonic acid compound and a phosphorus compound may be preferably used in the process of the present invention.

The sulfonic acid compound represented by the following formula (I) is suitably added:

A₂-SO₃X¹ (I)

wherein A₂ is a hydrocarbon group having 1 to 20 carbon atoms which may have a substituent, and X¹ is an ammonium cation or phosphonium cation.

By adding this, the activity of the alkali metal compound or alkali earth metal compound used for melt polycondensation can be reduced or deactivated to obtain a polycarbonate resin having excellent quality such as color, heat resistance and hydrolytic resistance. When the sulfonic acid compound is a sulfonic acid phosphonium salt represented by the following formula (II), it is particularly preferred because of its large effect: 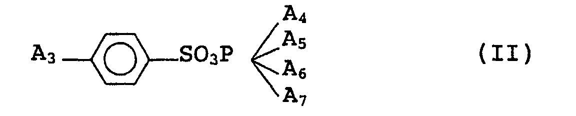 wherein A₃, A₄, A₅, A₆ and A₇ are each independently a monovalent hydrocarbon group having 1 to 20 carbon atoms.

The above sulfonic acid compound functions as a deactivator for an ester exchange polycondensation catalyst at the time of producing a polycarbonate to improve the thermal stability of the polymer.

As the above sulfonic acid compound are effectively used known catalyst deactivators enumerated in JP-A 8-59975, out of which ammonium salts and phosphonium salts of sulfonic acid are preferred. Ammonium salts and phosphonium salts of dodecylbenzenesulfonic acid, ammonium salts and phosphonium salts of paratoluenesulfonic acid, and ammonium salts and phosphonium salts of benzenesulfonic acid are also preferably used. In the present invention, tetrabutylphosphonium dodecylbenzenesulfonate and tetrabutylammonium paratoluenesulfonate are the most suitable because an excellent effect can be obtained.

The catalyst deactivator greatly reduces the activity of a catalyst and may be added to a polycarbonate resin alone or as a mixture with water.

The amount of the catalyst deactivator composed of a sulfonic acid compound and added to the polycarbonate resin obtained by melt polycondensation is 0.5 to 50 mols, preferably 0.5 to 10 mols, more preferably 0.8 to 5 mols based on 1 mol of the above main polycondensation catalyst selected from an alkali metal compound and an alkali earth metal compound. This is generally equivalent to 0.1 to 500 ppm based on the polycarbonate resin.

The phosphorus compound is, for example, phosphoric acid, phosphorous acid, hypophosphorous acid, pyrophosphoric acid, polyphosphoric acid, phosphoric acid ester or phosphorous acid ester.

Specific examples of the above phosphoric acid ester include trialkyl phosphates such as trimethyl phosphate, triethyl phosphate, tributyl phosphate, trioctyl phosphate, tridecyl phosphate, trioctadecyl phosphate and distearyl pentaerythrityl diphosphate, tricycloalkyl phosphates such as tricyclohexyl phosphate, and triaryl phosphates such as triphenyl phosphate, tricresyl phosphate, tris(nonylphenyl)phosphate and 2-ethylphenyl diphenylphosphate.

A compound represented by the following general formula (III) may be used as the phosphorous acid ester:

P (OR)₃ (III)

wherein R is an aliphatic hydrocarbon group, alicyclic hydrocarbon group or aromatic hydrocarbon group, with the proviso that three R's may be the same or different.

Illustrative examples of the compound represented by the above formula (III) include trialkyl phosphites such as trimethyl phosphite, triethyl phosphite, tributyl phosphite, trioctyl phosphite, tris(2-ethylhexyl)phosphite, trinonyl phosphite, tridecyl phosphite, trioctadecyl phosphite and tristearyl phosphite; tricycloalkyl phosphites such as tricyclohexyl phosphite; triaryl phosphites such as triphenyl phosphite, tricresyl phosphite, tris(ethylphenyl)phosphite, tris(2,4-di-t-butylphenyl)phosphite, tris(nonylphenyl)phosphite and tris(hydroxyphenyl)phosphite; arylalkyl phosphites such as phenyldidecyl phosphite, diphenyldecyl phosphite, diphenylisooctyl phosphite, phenylisooctyl phosphite and 2-ethylhexyldiphenyl phosphite. Further, distearylpentaerythrityl diphosphite and bis(2,4-di-t-butylphenyl)pentaerythrityl diphosphite may be used as the phosphorous acid ester.

These compounds may be used alone or in combination. Out of these, phosphorous acid esters represented by the above general formula (III) are preferred and aromatic phosphorous acid esters are particularly preferred as the phosphorus compound.

In the present invention, the phosphorus compound may be added in an amount of 0.0001 to 0.1 part by weight, preferably 0.001 to 0.05 part by weight based on 100 parts by weight of the polycarbonate. Outside the above range, an effect obtained by adding the phosphorus compound may not be fully developed or the phosphorus compound may exert a bad influence upon the quality of the polymer disadvantageously.

As described above, in the present invention, a polycarbonate having a viscosity average molecular weight of 5,000 to 100,000, preferably a molecular weight of 10,000 to 18,000 when it is used as an optical recording medium, is advantageously produced.

With the second production process of the present invention, an aromatic polycarbonate is continuously produced from a molten mixture continuously prepared by the second preparation process of the present invention. The second production process is the same as the first production process except that the molten mixture is continuously prepared and the aromatic polycarbonate is continuously produced. It should be understood that the above description of the first production process is applied to the second production process directly or with modifications obvious to people of ordinary skill in the art to be made for continuous production. The production equipment and method used in the continuous production process are known per se.

In the present invention, other ordinary additives such as a heat resistant stabilizer other than the above, release agent, processing stabilizer, antioxidant, optical stabilizer, ultraviolet light absorber, metal inactivating agent, metal soap, nucleating agent, antistatic agent, lubricant, flame retardant, mildew-proof agent, colorant, anti-fogging agent, natural oil, synthetic oil, wax, organic filler, inorganic filler may be added to the obtained polycarbonate resin in limits not prejudicial to the object of the present invention.

Illustrative examples of these additives are given below. That is, examples of the release agent include ester compounds of an aliphatic alcohol and an aliphatic carboxylic acid. Examples of the aliphatic alcohol include ethylene glycol, glycerin, trimethylolpropane, neopentyl glycol and pentaerythritol and examples of the aliphatic carboxylic acid include lauric acid, dodecylic acid, pentadecylic acid, palmitic acid, heptadecylic acid, stearic acid, nonadecanoic acid, arachic acid, behenic acid and lignoceric acid.

Examples of the processing stabilizer include 2-t-butyl-6-(3-t-butyl-2-hydroxy-5-methylbenzyl)-4-methylphenyl acrylate and 2-[1-(2-hydroxy-3,5-di-t-pentylphenyl)ethyl]-4,6-di-t-pentylphenyl acrylate.

Examples of the optical stabilizer include ultraviolet light absorbers such as benzotriazole-based compounds including 2-(3-t-butyl-2-hydroxy-5-methylphenyl)-5-chlorobenzotriazole, 2-(3,5-di-t-butyl-2-hydroxyphenyl)benzotriazole, 2 -(2-hydroxy-5-methylphenyl)benzotriazole, 2 -(2-hydroxy-5-t-octylphenyl)benzotriazole, 2-(3,5-di-t-pentyl-2-hydroxyphenyl)benzotriazole, 2-[2-hydroxy-3-(3,4,5,6-tetrahydrophthalimidemethyl) phenyl]benzotriazole and 2 -[2-hydroxy-3,5-bis(α,α-dimethylbenzyl)phenyl] benzotriazole; benzophenone-based compounds including 2-hydroxy-4-octyloxybenzophenone and 2-hydroxy-4-methoxybenzophenone; hydroxybenzophenone-based compounds including 2,4-di-t-butylphenyl and 3,5-di-t-butyl-4-hydroxybenzoate; and cyanoacrylate-based compounds including ethyl-2-cyano-3,3-diphenyl acrylate; and nickel-based quenchers such as nickel dibutyldithiocarbamate and [2,2'-thiobis(4-t-octylphenolate)]-2-ethylhexylamine nickel.

Examples of the metal inactivating agent include N,N'-[3-(3,5-di-t-butyl-4-hydroxyphenyl)propionyl] hydrazine and examples of the metal soap include calcium stearate and nickel stearate.

Examples of the nucleating agent include sorbitol-based and phosphate-based compounds such as sodium di(4-t-butylphenyl)phosphonate, dibenzylidene sorbitol and methylenebis(2,4-di-t-butylphenol)acid phosphate sodium salt.

Examples of the antistatic agent include quaternary ammonium salt-based and alkylphosphate-based compounds such as (β-lauramidepropyl) trimethylammonium methylsulfate. Examples of the flame retardant include halogen-containing phosphoric acid esters such as tris(2-chloroethyl)phosphate, halides such as hexabromocyclododecane and decabromophenyloxide, metal inorganic compounds such as antimony trioxide, antimony pentaoxide and alminum hydroxide, and mixtures thereof.

The process for producing a resin composition comprising the polycarbonate of the present invention from the above components is not particularly limited and the order of mixing the components is arbitrary. For example, a phosphorus compound and/or a sulfonic acid compound and other optional components may be added to and kneaded with the polycarbonate in a molten state or added to and kneaded with a solution of the polycarbonate. Stated more specifically, the following methods may be employed: one in which the phosphorus compound and/or sulfonic acid compound and other optional components may be added to or kneaded with the polycarbonate which is a reaction product in a reactor or extruder obtained in a molten state after the end of a polymerization reaction separately or simultaneously, one in which the obtained polycarbonate is pelletized and this pellet is supplied into a single-screw or double-screw extruder together with the phosphoric compound and/or sulfonic acid compound and other optional components to be melt kneaded together, and one in which the obtained polycarbonate is dissolved in a suitable solvent (such as methylene chloride, chloroform, toluene or tetrahydrofuran) and the phosphoric compound and/or sulfonic acid compound and other optional components are added to this solution separately or simultaneously and stirred. To reduce the thermal history time in a molten state and the number of times of re-melting, components such as the phosphorus compound and sulfonic acid compound are preferably added to and kneaded with the polycarbonate in a molten state obtained by melt polycondensation and pelletized.

The above polycarbonate resin composition is preferably vacuum treated. For the vacuum treatment, the treating device is not particularly limited but a reactor equipped with a decompression device and an extruder equipped with a decompression device may be used. The reactor equipped with a decompression device may be a vertical reactor or horizontal reactor but a horizontal reactor is preferred. The extruder equipped with a decompression device may be a vented single-screw extruder or double-screw extruder and can pelletize while a vacuum treatment is carried out in an extruder. The pressure is 0.05 to 750 mmHg (6.7 to 100,000 Pa), particularly preferably 0.05 to 5 mmHg (6.7 to 670 Pa) when a vacuum treatment is carried out in a reactor and 1 to 750 mmHg (130 to 100,000 Pa), particularly preferably 5 to 700 mmHg (670 to 93,000 Pa) when a vacuum treatment is carried out in an extruder. The vacuum treatment is preferably carried out at 240 to 350°C for 5 minutes to 3 hours when a reactor is used and 10 seconds to 15 minutes when an extruder is used. When the polycarbonate resin composition is subjected to a vacuum treatment, a polycarbonate-based composition which has reduced contents of the residual monomer and oligomer can be obtained. When the vacuum treatment is carried out, it may be optionally carried out after water, a saturated aliphatic hydrocarbon or nitrogen is added under pressure to reduce the contents of the residual monomer and oligomer. For example, when melt polycondensation is carried out using diphenyl carbonate as the carbonic acid diester, the content of the residual diphenyl carbonate in the polycarbonate can be reduced by the vacuum treatment.

The polycarbonate resin composition has a diphenyl carbonate content (residual content) of preferably 0.1 part or less by weight, particularly preferably 0.02 part or less by weight based on 100 parts by weight of the polymer. The above vacuum treatment is effective for this purpose.

Thus, in the process for producing a polycarbonate by carrying out a melt polycondensation reaction between an aromatic dihydroxy compound and the dihydroxy compound in the presence of an alkali metal compound or alkali earth metal compound, the amounts of the aromatic dihydroxy compound and the carbonic acid diester or the ratio of the carbonic acid diester to the aromatic dihydroxy compound can be quickly and efficiently measured by near infrared spectroscopy and adjusted and a polycarbonate obtained thereby has high quality with little variations.

### Examples

The following examples and comparative examples are provided for the purpose of further illustrating the present invention but are in no way to be taken as limiting.

Analysis was carried out by the following methods.

### (color)

The color b was measured using the Color and Color Deference Meter ND-1001DP of Nippon Denshoku Kogyo Co., Ltd.

### (terminal group structure)

The proportion (%) of the OH terminal group to the total of all the terminal groups was obtained by an NMR measurement method.

### Example 1

Production was carried out under the following conditions.

Powdery bisphenol A (to be abbreviated as BPA hereinafter) and molten diphenyl carbonate (to be abbreviated as DPC hereinafter) were continuously fed to a first stirring tank in a molar ratio of 0.500 kmol/0.515 kmol and molten at 140°C and this resulting mixture was continuously transferred to a second stirring tank maintained at 140 to 145°C. In this tank, liquid DPC was added to adjust the molar ratio of DPC to BPA to 1.04.

This mixed solution was transferred to a third stirring tank maintained at 180° C at a rate of 0.16 kmol/hr in terms of bisphenol A.

The molar ratio of DPC to BPA was continuously measured by installing a circulation line in the second stirring tank, inserting a probe in the line and connecting the probe to a near infrared spectroscope by an optical fiber cable.

The molar ratio was controlled by the following method. The molar ratio of DPC to BPA of the sample in the second stirring tank was obtained by liquid chromatography every 8 hours and the difference between the measurement value and the target value which was 1.04 was corrected for 10 days. For the subsequent 20 days, the molar ratio of DPC to BPA obtained by the above near infrared spectroscope was used to correct the difference between this value and the target value which was 1.04.

Tetramethylammonium hydroxide and bisphenol A disodium salt were added as catalysts at a rate of 0.03 mol/hr and 0.00008 mol(5 x 10-7 mol/mol-BPA)/hr, respectively, the surface level of the resulting solution was adjusted to ensure that the residence time should become 40 minutes, and the solution stirred.

Thereafter, this reaction solution was transferred to the third stirring tank maintained at a temperature of 210° C and a pressure of 100 mmHg at a rate of 0.16 kmol/hr in terms of BPA. The surface level of the solution was adjusted to ensure that the residence time should become 40 minutes, and the solution was stirred while the formed phenol was distilled off.

This reaction solution was then transferred to a fourth stirring tank maintained at a temperature of 260°C and a pressure of 15 mmHg at a rate of 0.16 kmol/hr in terms of BPA. The surface level of the solution was adjusted to ensure that the residence time should become 40 minutes, and the solution was stirred while the formed phenol was distilled off. The viscosity average molecular weight of the reaction product obtained after the reaction became steady was 6,000.

This reaction product was then supplied into a double-screw horizontal polymerizer maintained at 275° C and 0.5 mmHg by a gear pump at a rate of 0.16 kmol/hr (about 40 kg/hr) in terms of BPA and polymerized for a residence time of 40 minutes. The viscosity average molecular weight of the polymer at this point was 15,500.

This polymer in a molten state was supplied into a double-screw extruder (L/D = 44, barrel temperature = 260°C) having three unit addition zones consisting of a kneading zone, sealing zone and vacuum zone (pressure of 15 mmHg) by a gear pump at a rate of 0.16 kmol/hr (about 40 kg/hr) in terms of BPA, 10 ppm of tetrabutylphosphonium dodecylbenzenesulfonate, 30 ppm of trisnonylphenyl phosphite and 500 ppm of monoglyceride stearate were continuously added to and kneaded with the polycarbonate, the resulting polymer was formed into a strand through a die, and the strand was cut by a cutter to obtain a pellet.

In the above production, to evaluate the predictability of the near infrared spectroscope, 30 near infrared measurement values obtained by 10 days of the actual on-line measurement for the molar ratio of DPC to BPA were compared with 30 measurement values obtained by using the existing liquid chromatograph for the same time as above, and the obtained near infrared spectrum was converted into a 2-dimensional derivative spectrum which was then statistically processed by the partial least square method (PLS method) to obtain correlation. The correlation coefficient was 0.99.

The "calculated DPC/BPA molar ratio" calculated from 60 near infrared measurement values obtained by 20 days of the actual on-line measurement using the above correlation expression was compared with 60 measurement values obtained by using the existing chromatograph for the same time as above. As a result, the dispersion (σ) of a value obtained by dividing the difference between the calculated DPC/BPA molar ratio and the chromatography value by the calculated DPC/BPA molar ratio was 0.002.

For the above 20 days, the actual DPC/BPA molar ratio of the raw materials was maintained at a range of 1.037 to 1.044. For the first 10 days, the DPC/BPA molar ratio was between 1.031 and 1.048.

The polycarbonate obtained for the above 20 days was satisfactory with little variations in quality as shown in Table 1. The variation σ of Color b was 0.11 which is much smaller than σ (= 0.19) for the first 10 days.

As understood from the above results, in the measurement of the DPC/BPA molar ratio, the near infrared measurement method can compare with chromatography in terms of accuracy and is superior to chromatography in repeatability.

One time of measurement including pre-processing and data analysis takes substantially 1 hour or more in chromatography whereas it takes only several minutes in the near infrared measurement method. Therefore, the near infrared measurement method is very effective because it can greatly simplify the equipment and can be adapted to the continuous process in particular.

As for the environment of measurement by near infrared spectroscopy in the above description, the liquid temperature was 140 to 145° C, and the linear velocity of the mixed solution was 0.07 m/sec. The wavelength used in the near infrared spectroscopy was 1,600 to 1,850 nm.

**Table 1**

| item | after 240 hours | after 480 hours | after 720 hours |
|---|---|---|---|
| color (Color b) | 0.2 | 0.2 | 0.1 |
| proportion of OH terminal group (%) | 23 | 21 | 22 |

## Claims

1. A process for the preparation of a molten mixture containing an aromatic hydroxy compound and a carbonic acid diester in a predetermined molar ratio, comprising:
(1) measuring the absorbance of the molten mixture at near infrared radiation having a wavelength of 1,600 to 1,900 nm; and (2) obtaining the molar ratio of the carbonic acid diester to the aromatic hydroxy compound in the molten mixture from the measured absorbance and adjusting the molar ratio of the carbonic acid diester to the aromatic hydroxy compound to the predetermined molar ratio.

2. A process for the continuous preparation of a molten mixture containing an aromatic hydroxy compound and a carbonic acid diester in a predetermined molar ratio, comprising:
(1) continuously or intermittently measuring the absorbance of the molten mixture at near infrared radiation having a wavelength of 1,600 to 1,900 nm, while maintaining a change in the temperature of the molten mixture at 10°C or less and causing the molten mixture to flow at a linear velocity of 0.01 to 10 m/sec; and
(2) obtaining the molar ratio of the carbonic acid diester to the aromatic hydroxy compound in the molten mixture from the measured absorbance and adjusting the molar ratio of the carbonic acid diester to the aromatic hydroxy compound to the predetermined molar ratio.

3. The process of claim 2, wherein the molar ratio of the carbonic acid diester to the aromatic dihydroxy compound in the molten mixture in the step (2) is obtained from the absorbance measured in the step (1) using the established relationship between the molar ratio of the carbonic acid diester to the aromatic dihydroxy compound and the absorbance of the molten mixture of the carbonic acid diester and the aromatic dihydroxy compound.

4. The process of claim 3, wherein the established relationship is obtained by carrying out the multi-regression analysis or partial least square analysis of the measured absorbance of the molten mixture of the carbonic acid dieter and the aromatic dihydroxy compound in a known molar ratio.

5. The process of claim 2, wherein the absorbance is measured for near infrared radiation having a plurality of different wavelengths.

6. A process for the production of an aromatic polycarbonate, comprising melt polycondensing a molten mixture prepared by the process of claim 1 in the presence of a catalyst containing an alkali metal compound or alkali earth metal compound.

7. The process of claim 6, wherein the molten mixture contains a carbonic acid diester and an aromatic dihydroxy compound in a molar ratio of 1.0 to 1.1.

8. A process for the continuous production of an aromatic polycarbonate, comprising continuously melt polycondensing a molten mixture prepared by the process of claim 2 in the presence of a catalyst containing an alkali metal compound or an alkali earth metal compound.

9. The process of claim 8, wherein the molten mixture contains a carbonic acid diester and an aromatic dihydroxy compound in a molar ratio of 1.0 to 1.1.

10. The process of claim 8, wherein the molten mixture to be continuously melt polycondensed has a variation width of the molar ratio of the carbonic acid diester to the aromatic dihydroxy compound of ±0.5 %.

11. Use of near infrared radiation having a wavelength of 1,600 to 1,900 nm for obtaining the molar ratio of a carbonic acid diester to an aromatic dihydroxy compound in a molten mixture containing the aromatic dihydroxy compound and the carbonic acid diester from the absorbance of the molten mixture.
